(19) **Europäisches Patentamt / European Patent Office / Office européen des brevets**

(11) **EP 2 874 506 B1**

(12) **EUROPEAN PATENT SPECIFICATION**

(45) Date of publication and mention
of the grant of the patent:
**10.04.2019 Bulletin 2019/15**

(21) Application number: **13737099.5**

(22) Date of filing: **01.07.2013**

(51) Int Cl.:
*A23K 20/10* (2016.01)         *A23K 20/189* (2016.01)
*A23K 40/20* (2016.01)         *A23K 40/25* (2016.01)
*A23K 40/30* (2016.01)         *A23P 10/20* (2016.01)
*A23P 10/30* (2016.01)         *A23P 20/00* (2016.01)
*A23P 20/12* (2016.01)         *C11D 3/37* (2006.01)
*C11D 7/10* (2006.01)          *C11D 7/24* (2006.01)
*C11D 7/26* (2006.01)          *A23K 20/158* (2016.01)
*A23K 20/163* (2016.01)        *C11D 17/00* (2006.01)
*C11D 3/22* (2006.01)

(86) International application number:
**PCT/US2013/048951**

(87) International publication number:
**WO 2014/014647 (23.01.2014 Gazette 2014/04)**

(54) **METHOD OF MAKING ENZYME GRANULES**

METHODE ZUR ENZYMGRANULATHERSTELLUNG

MÉTHODE POUR LA FABRICATION DES GRANULÉS D'ENZYMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.07.2012  US 201261673183 P**

(43) Date of publication of application:
**27.05.2015  Bulletin 2015/22**

(73) Proprietor: **Danisco US Inc.**
**Palo Alto, California 94304 (US)**

(72) Inventor: **GEBERT, Mark, S.**
**Palo Alto, California 94304 (US)**

(74) Representative: **Mewburn Ellis LLP**
**City Tower**
**40 Basinghall Street**
**London EC2V 5DE (GB)**

(56) References cited:
**EP-A1- 0 510 761          WO-A1-01/25412
WO-A1-03/059087         WO-A1-2005/074707
WO-A1-2011/004375       WO-A1-2011/134809
WO-A2-03/000625         WO-A2-2007/044968
GB-A- 876 226           US-A- 4 657 784
US-A1- 2010 272 852**

• **NAZAR M RANJHA ET AL: "Encapsulation and
characterization of controlled release
flurbiprofen loaded microspheres using beeswax
as an encapsulating agent", JOURNAL OF
MATERIALS SCIENCE: MATERIALS IN
MEDICINE, KLUWER ACADEMIC PUBLISHERS,
BO, vol. 21, no. 5, 10 March 2010 (2010-03-10) ,
pages 1621-1630, XP019822070, ISSN: 1573-4838**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD**

The present application relates to method of making enzyme granules.

**BACKGROUND**

Industrially-produced enzymes have come to play a prominent role in many commercial areas. For example, the use of enzymes in foods and animal feed has become a common practice. Enzymes are known to improve digestibility of food and animal feed, reduce anti-nutritional factors in food and animal feed, and improve animal productivity. Additionally, enzymes are widely employed in various household cleaning products, including laundry and dish detergents. Enzymes are also prominently used in such areas as starch processing, biofuels, and dairy industries.

Inactivation of enzymes can occur during industrial food and feed processes (such as pelleting) by, for example, heat treatment, high pressure, shear stress, and chemical treatment (such as pH, surfactant, and solvents). The inactivation is at least partially reversible if the enzyme reactivates after processing, for example, upon cooling after steam treatment and pelleting; the inactivation is irreversible if the catalytic activity does not resume after processing, for example, upon cooling after steam treatment and pelleting. The irreversible inactivation and reduced activity of an enzyme is generally not desirable in processes such as pelleting. There is a need in the food and feed industries for stable, durable enzyme granules to serve as components in formulations that are subjected to steam treatment pelleting processes without appreciable loss of enzyme activity.

Approaches to avoid the problem of irreversibly inactivating enzymes or reducing the activity of the enzyme in industrial processes include identifying new sources of an enzyme (e.g. the identification of a known enzyme in an extreme thermophile microorganism) or identifying means to stabilize known enzymes. Klibanov, 1983, (Stabilization of Enzymes against Thermal Inactivation, Advances in Applied Microbiology, volume 29, page 1-28) discloses that there are three basic means for stabilizing enzymes: (1) immobilization, (2) chemical modification and (3) inclusion of additives. However, Klibanov (1983) further discloses that any one of these methods could lead to stabilization or destabilization, or have no effect at all. The present teachings seek to overcome some of these problems by use of an improved granule formulation.

In some situations, it can be desirable to melt a coating of material that has already been applied to a granule, for example from an aqueous suspension or dispersion of such a material. This would be hoped to cause the individual particles in the coating to melt and fuse together, creating a continuous coating with improved barrier properties. However, in situations where the particles are in intimate contact with one another, such as in fluid bed or pan coating, this will cause the particles to agglomerate and fuse together due to the tackiness of the now-molten coating destroying the intactness of individual granules and creating chips or other defects in the outer coating of the granules.

While others have attempted to make granules using melted layers (see US Patent 4657784), these approaches have not been successful. For example, such approaches use coatings that are applied in melted form. As a result of applying the layers in melted form, significant manufacturing challenges occur, such as difficulty in maintaining the spray nozzles from clogging, and difficulties associated with temperature control.

The present teachings address these and other problems through a novel granule design and method of making.

In addition to the animal feed industry, the granules provided by the present teachings can provide use in any of a variety of contexts, including the starch processing industry, the dairy industry, the biofuels industry, and the detergent industry, including household cleaning applications such as dish and laundry detergents. WO 2007/044968 describes enzyme granules in which a core containing enzyme is surrounded by a moisture hydrating layer and one or more moisture barrier layers. In one example with two moisture barrier layers, the granules are treated to anneal the moisture barrier layers.

**BRIEF SUMMARY**

The present invention provides a method of making a granule comprising:

providing a core which comprises an enzyme active agent;
applying a melt-delayed layer in an un-melted form to a growing granule;
applying a melt-resistant coating layer that melts at a higher temperature than the melt-delayed layer and which is located external to the melt-delayed layer; and
melting the melt-delayed layer, thereby forming the granule.

In some embodiments, the present teachings provide a process for producing an animal feed composition according to any of the preceding claims, comprising: preparing granules having a core comprising an active agent, a melt-delayed layer, and a melt-resistant layer; mixing the granules together with an unpelleted mixture; and, pelleting the unpelleted mixture at a temperature of 70°C-95°C.

The invention is defined by the appended set of claims.

## BRIEF DESCRIPTION OF THE DRAWINGS

**Figure 1** depicts an illustrative granule according to the present teachings.

**Figure 2** depicts illustrative granules according to some embodiments of the present teachings.

**Figure 3** depicts illustrative granules according to some embodiments of the present teachings.

**Figure 4** depicts illustrative data according to some embodiments of the present teachings.

**Figure 5** depicts illustrative data according to some embodiments of the present teachings.

## DETAILED DESCRIPTION

The practice of the present teachings will employ, unless otherwise indicated, conventional techniques of molecular biology (including recombinant techniques), microbiology, cell biology, biochemistry, and animal feed pelleting, which are within the skill of the art. Such techniques are explained fully in the literature, for example, Molecular Cloning: A Laboratory Manual, second edition (Sambrook et al., 1989); Oligonucleotide Synthesis (M. J. Gait, ed., 1984; Current Protocols in Molecular Biology (F. M. Ausubel et al., eds., 1994); PCR: The Polymerase Chain Reaction (Mullis et al., eds., 1994); Gene Transfer and Expression: A Laboratory Manual (Kriegler, 1990), and Fairfield, D. 1994. Chapter 10, Pelleting Cost Center. In Feed Manufacturing Technology IV. (McEllhiney, editor), American Feed Industry Association, Arlington, Va., pp. 110-139.

Unless defined otherwise herein, all technical and scientific terms used herein have the same meaning as commonly understood by one of ordinary skill in the art to which the present teachings belong. Singleton, et al., Dictionary of Microbiology and Molecular Biology, second ed., John Wiley and Sons, New York (1994), and Hale & Markham, The Harper Collins Dictionary of Biology, Harper Perennial, NY (1991) provide one of skill with a general dictionary of many of the terms used in this invention. Any methods and materials similar or equivalent to those described herein can be used in the practice or testing of the present teachings.

Numeric ranges provided herein are inclusive of the numbers defining the range.

### *Definitions*

As used herein, the term "granule" refers to a particle which contains a core, an active agent, and optionally at least one coating layer.

As used herein, the term "core" refers to the inner nucleus of a granule. The cores may be produced by a variety of fabrication techniques including: rotary atomization, wet granulation, dry granulation, spray drying, disc granulation, extrusion, pan coating, spheronization, drum granulation, fluid-bed agglomeration, high-shear granulation, fluid-bed spray coating, crystallization, precipitation, emulsion gelation, spinning disc atomization and other casting approaches, and prill processes. Such processes are known in the art and are described in US Pat. No. 4689297 and US Pat. No. 5324649 (fluid bed processing); EP656058B1 and US Pat. No. 454332 (extrusion process); US Pat. No. 6248706 (granulation, high-shear); and EP804532B1 and US Pat. No. 6534466 (combination processes utilizing a fluid bed core and mixer coating).

The core includes the active agent, which may or may not be coated around a seed. The active agent in the core is an enzyme. Suitable core materials for use are preferably a hydratable or porous material (i.e., a material which is dispersible or soluble in water) that is a feed grade material. The core material can either disperse in water (disintegrate when hydrated) or solubilize in water by going into a true aqueous solution. Clays (for example, the phyllosilicates bentonite, kaolin, montmorillonite, hectorite, saponite, beidellite, attapulgite, and stevensite), silicates, such as sand (sodium silicate), nonpareils and agglomerated potato starch or flour, or other starch granule sources such as wheat and corn cobs are considered dispersible. (Nonpareils are spherical particles made of a seed crystal that has been built onto and rounded into a spherical shape by binding layers of powder and solute to the seed crystal in a rotating spherical container. Nonpareils are typically made from a combination of a sugar such as sucrose, and a powder such as cornstarch.) The core may comprise sodium chloride or sodium sulfate crystal, also referred to as a seed, or other inorganic salt crystal. The core may comprise a sucrose crystal. Particles composed of inorganic salts and/or sugars and/or small organic molecules may be in the core. Suitable water soluble ingredients for incorporation into cores include: inorganic salts such as sodium chloride, ammonium sulfate, sodium sulfate, magnesium sulfate, zinc sulfate; or urea, citric acid, sugars such as sucrose, lactose and the like. Cores may further comprise one or more of the following: feed or food grade polymers, fillers, plasticizers, fibrous materials, extenders and other compounds known to be used in cores. Suitable polymers include polyvinyl alcohol (PVA), including partially and fully hydrolyzed PVA, polyethylene glycol, polyethylene oxide, polyvinyl pyrrolidine, and carbohydrate polymers (such as starch, amylose, amylopectin, alpha and beta-glucans, pectin, glycogen), including mixtures and derivatives thereof. Suitable fillers useful in the cores include inert materials used to add bulk and reduce cost, or used for the purpose of adjusting the intended enzyme activity in the finished granule. Examples of such fillers include, but are not limited to, water soluble agents such as salts, sugars and water dispersible agents such as clays, talc, silicates, cellulose and starches, and cellulose and starch derivatives. Suitable plasticizers useful in the cores of the present teachings are low molecular weight organic compounds and are highly specific to the polymer being plasticized. Examples include, but are not limited to, sugars (such as, glucose, fructose and sucrose), sugar alcohols (such as, glycerol, lower molecular weight polyethylene glycols, sorbitol, xylitol and maltitol and other glycols), polar low molecular weight organic compounds, such as urea, or other known plasticizers such as water or feed grade plasticizers. Suitable fibrous materials useful in the cores include, but are not limited to: cellulose, and cellulose derivatives such as HPMC (hydroxy-propyl-methyl cellulose), CMC (carboxy-methyl cellulose), HEC (hydroxy-ethyl cellulose). In one embodiment, particularly for feed applications, of the present teachings, the core is a water-soluble or dispersible corn cob material or sugar or salt crystal. In another embodiment particularly suitable for household cleaning applications, the core is a water-soluble or dispersible sugar or salt crystal or a nonpareil. Those skilled in the art will recognize that, for feed and food applications, the cores (and any polymers, fillers, plasticizers, fibrous materials, and extenders), are acceptable for food and/or feed applications. For household cleaning applications, such a restriction need not apply.

The term "coating layer" and "layer" are used herein interchangeably. The first coating layer generally encapsulates the core in order to form a substantially continuous layer so that the core surface has few or no uncoated areas. Subsequent coating layers can encapsulate the growing granule to form one or more additional substantially continuous layer(s). The materials (e.g. the enzyme active agent and components detailed herein) used in the granule and/or multilayered granule can be suitable for the use in foods and/or animal feeds, and accordingly can be food grade or feed grade.

The term "outer coating layer" as used herein refers to the coating layer of a multi-layered granule which is the furthest from the core (i.e. the last coating layer which is applied). The outer coating layer can be the melt-resistant layer.

The term "melt-delayed layer" refers to the layer of a multi-layered granule that melts at a lower temperature than the melt-resistant coating layer, is located internal to the melt-resistant layer, and is applied to a growing granule in un-melted form, but later melted after the application of the melt-resistant layer. The melt-delayed layer comprises at least one "melt-delayed material", and at least one aggregation inhibitor. Illustrative melt-delayed materials include waxes including carnauba wax, paraffin wax, bees wax, polyethylene glycol (PEG) and stearic acid. In some embodiments, the melt-delayed material is carnauba wax.

The term "melt-resistant layer" refers to the layer of a multi-layered granule that melts at a higher temperature than the melt-delayed layer, and which is located external to the melt-delayed layer.

The term "aggregation inhibitor" refers to the presence of at least one material that inhibits aggregation which may lead to the precipitation of the melt-delayed materials. Since the melt-delayed materials are applied as an aqueous dispersion or an aqueous emulsion, it can be desirable to include an aggregation inhibitor in the form of a surfactant, dispersant or wetting agent to keep the particles or droplets of melt-delayed materials from aggregating and precipitating in solution. Suitable surfactants, dispersants or wetting agents include polysorbates such as polysorbate 80, sodium dodecyl sulfate, alcohol ethoxylates and polyvinyl alcohol.

The term "melt-resistant layer material" refers to any of a collection of materials that comprise the melt-resistant layer, and which together have the property of a melting temperature that is higher than the melting temperature of the melt-delayed layer. Illustrative melt-resistant layer materials include HPMC, polyethylene oxide, gum arabic, sucrose, starch, sodium sulfate, magnesium sulfate, PVA and talc.

The active agent in the core is an enzyme. Any enzyme may be used, and a nonlimiting list of enzymes include phytases, xylanases, β-glucanases, phosphatases, proteases, amylases (alpha or beta or glucoamylases) cellulases, lipases, cutinases, oxidases, transferases, reductases, hemicellulases, mannanases, esterases, isomerases, pectinases, lactases, peroxidases, laccases, other redox enzymes and mixtures thereof. Particularly preferred enzymes include a xylanase from *Trichoderma reesei* and a variant xylanase from *Trichoderma reesei,* both available from DuPont Industrial Biosciences or the inherently thermostable xylanase described in EP1222256B1, as well as other xylanases from *Aspergillus niger, Aspergillus kawachii, Aspergillus tubigensis, Bacillus circulans, Bacillus pumilus, Bacillus subtilis, Neocallimastix patriciarum,Penicillium species, Streptomyces lividans, Streptomyces thermoviolaceus, Thermomonospora fusca, Trichoderma harzianum, Trichoderma reesei, Trichoderma viride.* Additional particularly preferred enzymes include phytases, such as for example Finase L®, a phytase from Aspergillus sp., available from AB Enzymes, Darmstadt, Germany; Phyzyme™ XP, a phytase from E. Coli, available from DuPont Nutrition and Health, and other phytases from, for example, the following organisms: Trichoderma, Penicillium, Fusarium, Buttiauxella, Citrobacter, Enterobacter, Penicillium, Humicola, Bacillus, and Peniophora, as well as those phytases described in US patent applications 61/595,923 and 61/595,941, both filed February 12, 2012. An example of a cellullase is Multifect® BGL, a cellulase (beta glucanase), available from DuPont Industrial Biosciences and other cellulases from species such as Aspergillus, Trichoderma, Penicillium, Humicola, Bacillus, Cellulomonas, Penicillium, Thermomonospore, Clostridium, and Hypocrea. The cellulases and endoglucanases described in US20060193897A1 also may be used. Amylases may be, for example, from species such as Aspergillus, Trichoderma, Penicillium, Bacillus, for instance, *B. subtilis, B. stearothermophilus, B. lentus, B. licheniformis, B. coagulans,* and *B. amyloliquefaciens.* Suitable fungal amylases are derived from *Aspergillus,* such as *A. oryzae* and *A. niger.* Proteases may be from *Bacillus amyloliquefaciens, Bacillus lentus, Bacillus subtilis, Bacillus licheniformis, and Aspergillus and Trichoderma species.* Phytases, xylanases, phosphatases, proteases, amylases, esterases, redox enzymes, lipases, transferases, cellulases, and β-glucanases are enzymes frequently used for inclusion in animal feed. Enzymes suitable for inclusion into tablets for household care applications are similar, particularly proteases, amylases, lipases, hemicellulases, redox enzymes, peroxidases, transferases, and cellulases. In particularly preferred aspects the enzymes are selected from phytases, xylanases, beta glucanases, amylases, proteases, lipases, esterases, and mixtures thereof. Two enzymes may be provided in the granule, a xylanase and a beta-glucanase. The enzymes may be mixed together or applied to the granule separately. In another embodiment, three enzymes are provided in the granule, namely beta-glucanase, xylanase and phytase. The above enzyme lists are examples only and are not meant to be exclusive. Any enzyme may be used in the granules including wild type, recombinant and variant enzymes of bacterial, fungal, yeast, plant, insect and animal sources, and acid, neutral or alkaline enzymes. It will be recognized by those skilled in the art that the amount of enzyme used will depend, at least in part, upon the type and property of the selected enzyme and the intended use.

As used herein, the terms "pellets" and "pelleting" refer to solid, rounded, spherical and cylindrical tablets or pellets and the processes for forming such solid shapes, particularly feed pellets and solid, extruded animal feed. Known food and animal feed pelleting manufacturing processes generally include admixing together food or feed ingredients for about 1 to about 5 minutes at room temperature, transferring the resulting admixture to a surge bin, conveying the admixture to a steam conditioner, optionally transferring the steam conditioned admixture to an expander, transferring the admixture to the pellet mill or extruder, and finally transferring the pellets into a pellet cooler. Fairfield, D. 1994. Chapter 10, Pelleting Cost Center. In Feed Manufacturing Technology IV. (McEllhiney, editor), American Feed Industry Association, Arlington, Va., pp. 110-139.

As used herein, the term "unpelleted mixtures" refers to premixes or precursors, base mixes, mash, and diluents. Premixes typically contain vitamins and trace minerals. Base mixes typically contain food and feed ingredients such as dicalcium phosphate, limestone, salt and a vitamin and mineral premix, but not grains and protein ingredients. Diluents include, but are not limited to grains (for example wheat middlings and rice bran) and clays, such as phyllosilicates (the magnesium silicate sepiolite, bentonite, kaolin, montmorillonite, hectorite, saponite, beidellite, attapulgite, and stevensite). Clays also function as carriers and fluidizing agent, or diluents, for feed premixes. Mash typically comprises a complete animal diet.

As used herein, the term "recovered activity" refers to the ratio of (i) the activity of an active agent after a treatment involving one or more of the following stressors: heating with or without moisture, increased pressure, increased pH, decreased pH, storage, drying, exposure to surfactant(s), exposure to solvent(s), and mechanical stress) to (ii) the activity of the active agent before the treatment. The recovered activity may be expressed as a percentage.

The percent recovered activity is calculated as follows:

$$\% \text{ recovered activity} = \left( \frac{\text{activity after treatment}}{\text{activity before treatment}} \right) \times 100\%$$

In the context of pelleting experiments, the "activity before treatment" can be approximated by measuring the active agent activity present in the mash that does not undergo treatment in a manner that is otherwise matched to the active agent that does undergo treatment. For example, the active agent in the untreated mash is handled and stored for a similar time and under similar conditions as the active agent in the treated mash, to control for possible interactions or other effects outside of the specified treatment per se.

## Examples

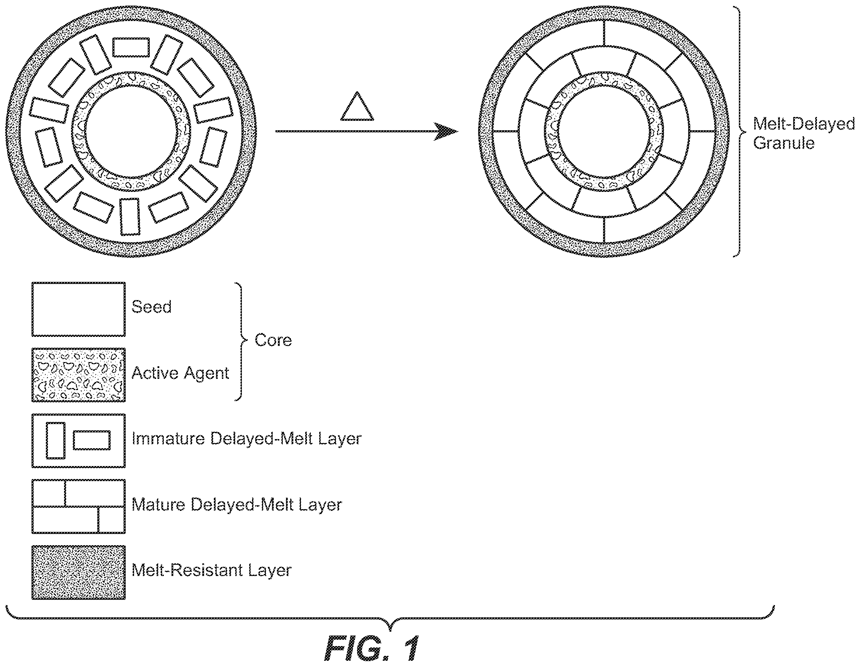

According to Figure 1, a granule comprises a seed (such as a salt crystal, for example a sodium sulfate crystal), around which an enzyme active agent is placed. The resulting core can then be subjected to a fluid-bed spray coating process for addition of the various layers to make a melt-delayed granule. As depicted here, an immature melt-delayed layer surrounds the active agent, followed by a melt-resistant layer. Following a melting step such as with heat, the immature melt-delayed layer melts to become a mature melt-delayed layer. The melt-resistant layer remains intact throughout.

Thus, by putting a thin, higher melting point coating (the melt-resistant layer) on top of the lower melting point coating (the melt-delayed layer), it was possible to melt the lower melting point coating while not melting the higher melting point layer. This has the effect of preventing agglomeration, since the external layers avoid having a tackiness that causes unwanted agglomeration. Subsequent cooling allows for the lower melting point layer (the immature melt-delayed layer) to harden into a mature melt-delayed layer, which can improve the barrier properties of this layer, and hence improve the durability and performance of the resulting melt-delayed granule.

The seed and enzyme may be made using fluid-bed spray coating, such that the enzyme is deposited as a coating onto a seed, to make a core. The seed and enzyme may be made through other means, such that the enzyme does not comprise a layer over the seed but can rather be interspersed with any of a variety of material(s).

The melt-delayed layer may be directly adjacent to the core, such that there are no intervening layers. The melt-delayed layer may be directly adjacent to the melt-resistant layer, such that there are no intervening layers. In some embodiments, the melt-resistant layer is the outer layer. An additional layer or two or more can reside external to the melt-resistant layer.

The entire granule may be made using fluid-bed spray coating, wherein a seed is first coated with an enzyme layer, the enzyme layer is next coated with a melt-delayed layer, and finally a melt-resistant layer is added. In such a granule, no intervening layers between the core, the melt-delayed layer, and the melt-resistant layer, is implemented. However, one or more additional intervening layers can be added, either between the core and the melt-delayed layer, and/or between the melt-delayed layer and the melt-resistant layer, or external to the melt-resistant layer.

The melt-delayed layer can range in composition from 2% to 40% by weight of the granule. The melt-delayed layer can range in composition from 3%-15%, 10%-20%, or 4%-10% by weight of the granule.

The melt-resistant layer can comprise < 10% by weight of the granule. The melt-resistant layer can comprise < 5% by weight of the granule. The melt-resistant layer can comprise 1-5% by weight of the granule.

In some embodiments, the melt-delayed layer comprises between 4%-10% of the granule by weight, and the melt-resistant layer comprises < 5% of the granule by weight, and there are no intervening layers between the core (which comprises an enzyme as the active agent), melt-delayed layer, and the melt-resistant layer, and the difference in melting points between the melt-resistant layer and the melt-delayed layer is 5°C or greater.

The melting temperature of the melt-delayed layer can be any temperature lower than the melt-resistant layer, though is likely to be greater than room temperature, but less than 120°C, allowing for easy accessibility with typical process equipment such as a fluidized bed coater. In some embodiments, the difference in melting points of the melt-resistant layer and the melt-delayed layer is 5°C or greater.

If the melt-resistant layer is not the outer layer, the outer layer would typically be a coating with any of a variety of properties desired for the outer coating, such as for example a masking color, or resistance to dust formation. A typical masking color is white and this coating is typically a mixture of Titanium Dioxide and Polyvinyl Alcohol. A typical dust resistant coating is a highly plasticized polyvinyl alcohol coating with the plasticizer typically being glycerol or low molecular weight polyethylene glycol.

## EXAMPLE

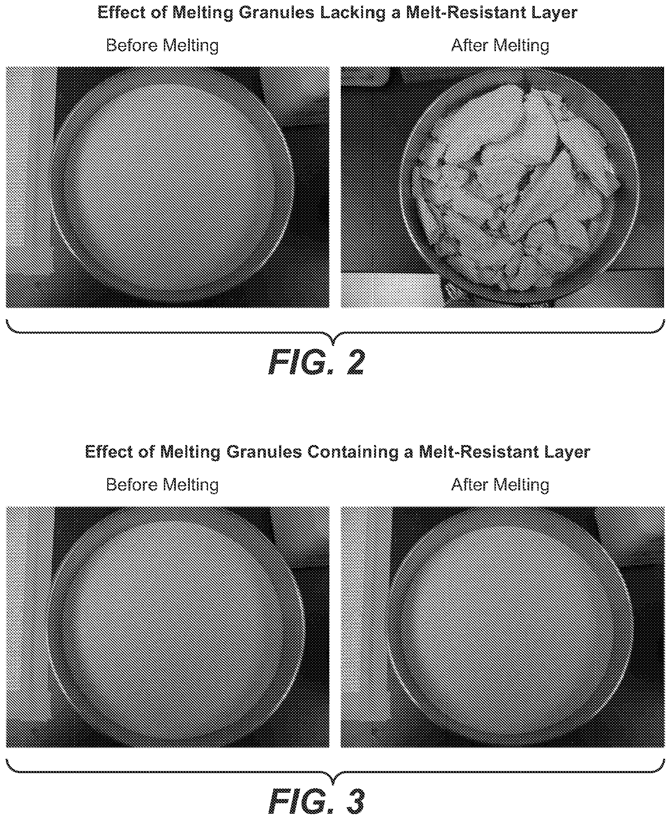

The present teachings can be further understood by reference to the following Example, which is provided by way of illustration and is not meant to be limiting. In this Example, granules were made with fluid-bed spray coating that contained a melt-delayed layer, and either did or did not further comprise a melt-resistant layer. The resulting granules were heated to melt the melt-delayed layer. Pictures of the resulting two kinds of granules showed severe agglomeration occurring in those granules lacking the melt-resistant layer. However, those granules containing a melt-resistant layer were shown to be free of agglomeration. This is shown in Figures 2 and 3.

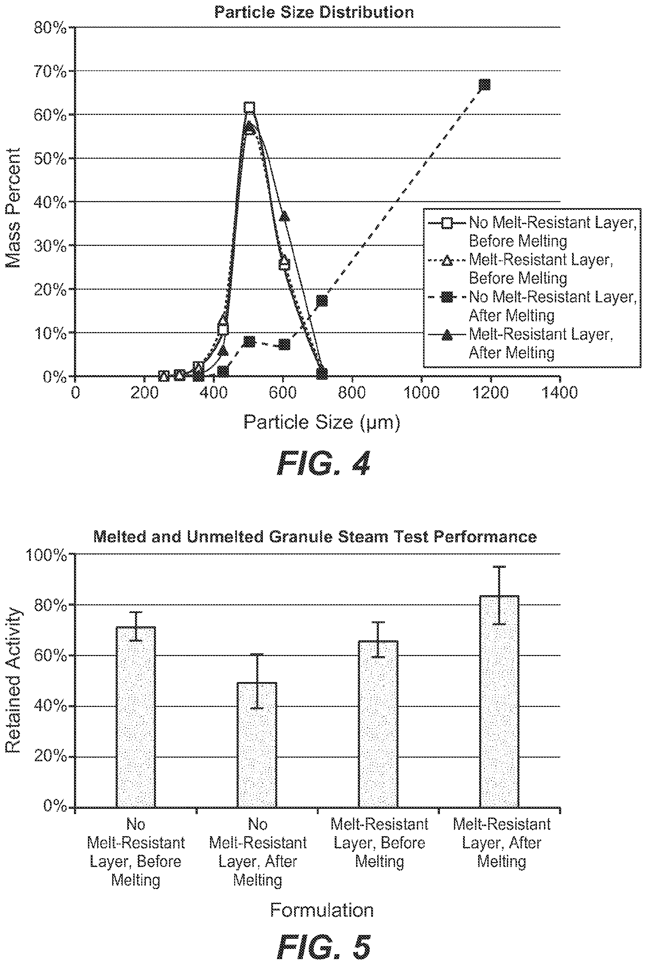

Data quantifying the agglomeration showed that in those granules lacking the melt-resistant layer, the percent of the total mass of granules in the agglomerated state (defined as those greater than 1000 microns in diameter) is 50%. However, those granules containing the melt-resistant layer had 0% of the mass of granules in this highly agglomerated state. Complete particle size distributions showing the significant increase in particle size for the granules lacking the melt-resistant layer are shown in Figure 4.

Next, the effect of melting the melt-delayed layer was examined. For the granules of this experiment, the melt-delayed layer was comprised of carnauba wax as the melt-delayed material. Carnauba wax is a commercially available material itself comprising an aggregation inhibitor. The melt-resistant layer of the granules of this experiment, when present, comprised 9% PVA/talc. In this study, enzyme activity was measured to assess the functional consequences of melting the melt-delayed layer.

For this experiment, the core was 32.21 % w/w sucrose for the granule with the melt-resistant coating, and 42.21 % w/w sucrose for the granule without the melt-resistant coating. On top of the core was the enzyme layer comprising 4.44% enzyme solids, 3% sucrose, 6% corn starch, 0.10% sodium phytate and 0.75% rapeseed oil. On top of the enzyme layer was the starch-sucrose layer comprising19.75% corn starch, 19.75% sucrose and 0.75% rapeseed oil. On top of the starch-sucrose layer was the melt-delayed layer comprising 4% carnauba wax. A 9% layer of partially hydrolyzed PVA (3% of granule) and talc (6% of granule) was used as the melt-resistant layer and this was on top of the melt-delayed layer.

Looking at the data in Figure 5, granules lacking melt-resistant layers were first examined (first two bars). As expected, a melting treatment of 90°C for 1 hour, as compared to the absence of such a melting treatment, resulted in a significant reduction in enzyme activity. This effect is hypothesized to be due to damage of the melt-delayed layer arising from agglomeration. Next, granules containing both a melt-delayed layer and a melt-resistant layer either were, or were not, subjected to the melting treatment to melt the melt-delayed layer. This comparison shows that granules containing the melt-delayed layer and the melt-resistant layer that were subjected to the melting treatment show a nearly 20% improvement in retained enzyme activity (fourth bar) relative to un-melted control granules (third bar).

## Claims

1. A method of making a granule comprising:

   providing a core which comprises an enzyme active agent;
   applying a melt-delayed layer in an un-melted form to a growing granule;
   applying a melt-resistant coating layer that melts at a higher temperature than the melt-delayed layer and which is located external to the melt-delayed layer; and
   melting the melt-delayed layer, thereby forming the granule.

2. The method according to claim 1 further comprising cooling the granule to allow the melt-delayed layer to solidify.

3. The method according to claim 1 or claim 2, wherein the melt-delayed layer comprises a melt-delayed material selected from the group consisting of carnauba wax, paraffin wax, bees wax, polyethylene glycol (PEG) and stearic acid.

4. The method according to any one of claims 1 to 3, wherein the melt-resistant coating layer comprises a melt-resistant material selected from the group consisting of HPMC, polyethylene oxide, gum Arabic, sucrose, starch, sodium sulfate, magnesium sulfate, PVA and talc.

5. The method according to any of the preceding claims wherein the melt-delayed layer comprises 4%-10% w/w of the granule.

6. The method according to any of the preceding claims wherein the melt-resistant coating layer comprises <5% by weight of the granule.

7. The method according to any of the preceding claims, wherein the melt-delayed layer has a melting point that is at least 5 degrees C lower than a melting point of the melt-resistant coating layer.

8. The method according to any of the preceding claims, wherein no intervening layers exist between the core, the melt-delayed layer and the melt-resistant layer.

9. The method according to any of the preceding claims, further comprising incorporating the granule in an animal feed pellet or unpelleted mixture.

10. The method according to any of the preceding claims, further comprising incorporating the granule in a household cleaning composition.

**11.** A method for producing an animal feed composition comprising:

preparing granules according to the method of any one of claims 1 to 8;
mixing the granules together with an unpelleted mixture; and,
pelleting the unpelleted mixture at a temperature of 70°C-95°C.

## Patentansprüche

**1.** Verfahren zur Herstellung eines Granulats, umfassend:

Bereitstellen eines Kerns, der einen Enzymwirkstoff umfasst;
Aufbringen einer schmelzverzögerten Schicht in ungeschmolzener Form auf ein Züchtungsgranulat;
Aufbringen einer schmelzwiderstandsfähigen Beschichtungsschicht, die bei höherer Temperatur schmilzt als
die schmelzverzögerte Schicht und die sich extern der schmelzverzögerten Schicht befindet; und
Schmelzen der schmelzverzögerten Schicht, wodurch das Granulat gebildet wird.

**2.** Verfahren nach Anspruch 1, ferner das Kühlen des Granulats umfassend, um zu gestatten, dass die schmelzverzögerte Schicht sich verfestigt.

**3.** Verfahren nach Anspruch 1 oder Anspruch 2, wobei die schmelzverzögerte Schicht ein schmelzverzögertes Material umfasst ausgewählt aus der Gruppe bestehend aus Carnaubawachs, Paraffinwachs, Bienenwachs, Polyethylenglykol (PEG) und Stearinsäure.

**4.** Verfahren nach einem der Ansprüche 1 bis 3, wobei die schmelzwiderstandsfähiger Beschichtungsschicht ein schmelzwiderstandsfähiges Material umfasst ausgewählt aus der Gruppe bestehend aus HPMC, Polyethylenoxid, Gummi arabicum, Sucrose, Stärke, Natriumsulfat, Magnesiumsulfat, PVA und Talkum.

**5.** Verfahren nach einem der vorhergehenden Ansprüche, wobei die schmelzverzögerte Schicht 4 %-10 % Gew.-%/Gew.-% des Granulats umfasst.

**6.** Verfahren nach einem der vorhergehenden Ansprüche, wobei die schmelzwiderstandsfähige Beschichtungsschicht <5 Gew.-% des Granulats umfasst.

**7.** Verfahren nach einem der vorhergehenden Ansprüche, wobei die schmelzverzögerte Schicht einen Schmelzpunkt aufweist, der mindestens 5 Grad C niedriger liegt als ein Schmelzpunkt der schmelzwiderstandsfähigen Beschichtungsschicht.

**8.** Verfahren nach einem der vorhergehenden Ansprüche, wobei keine dazwischentretenden Schichten zwischen dem Kern, der schmelzverzögerten Schicht und der schmelzwiderstandsfähigen Schicht vorliegen.

**9.** Verfahren nach einem der vorhergehenden Ansprüche, ferner das Integrieren des Granulats in ein Tierfutterpellet oder eine unpelletierte Mischung umfassend.

**10.** Verfahren nach einem der vorhergehenden Ansprüche, ferner das Integrieren des Granulats in eine Haushaltreinigungszusammensetzung umfassend.

**11.** Verfahren für die Herstellung einer Tierfutterzusammensetzung umfassend:

Herstellen von Granulaten dem Verfahren nach irgendeinem der Ansprüche 1 bis 8 entsprechend;
Zusammenmischen der Granulate mit einer unpelletierten Mischung; und
Pelletieren der unpelletierten Mischung bei einer Temperatur von 70 °C-95 °C.

## Revendications

**1.** Procédé de fabrication d'un granule comprenant:

la fourniture d'un coeur qui comprend un agent actif enzyme;

l'application d'une couche délayée à l'état fondu sous une forme non fondue à un granule en croissance;

l'application d'une couche de revêtement résistant à la fusion qui fond à une température supérieure à la couche délayée à l'état fondu et qui est localisée au plan externe vis-à-vis de la couche délayée à l'état fondu; et

la fusion de la couche délayée à l'état fondu, formant ainsi le granule.

2. Procédé selon la revendication 1 comprenant en outre le refroidissement du granule pour permettre à la couche délayée à l'état fondu de solidifier.

3. Procédé selon la revendication 1 ou la revendication 2, la couche délayée à l'état fondu comprenant un matériau délayé à l'état fondu sélectionné dans le groupe constitué de la cire de carnauba, de la cire de paraffine, de la cire d'abeille, du polyéthylène glycol (PEG) et de l'acide stéarique.

4. Procédé selon l'une quelconque des revendications 1 à 3, la couche de revêtement résistant à la fusion comprenant un matériau résistant à la fusion sélectionné dans le groupe constitué de la HPMC, du poly(oxyde d'éthylène), de la gomme arabique, du saccharose, de l'amidon, du sulfate de sodium, du sulfate de magnésium, du PVA et du talc.

5. Procédé selon l'une quelconque des revendications précédentes, la couche délayée à l'état fondu comprenant de 4 % à 10 % en pds/pds du granule.

6. Procédé selon l'une quelconque des revendications précédentes, la couche de revêtement résistant à la fusion comprenant < 5 % en poids du granule.

7. Procédé selon l'une quelconque des revendications précédentes, la couche délayée à l'état fondu présentant un point de fusion qui est inférieur au moins de 5 degrés C à un point de fusion de la couche de revêtement résistant à la fusion.

8. Procédé selon l'une quelconque des revendications précédentes, dans lequel aucune couche intervenante n'existe entre le coeur, la couche délayée à l'état fondu et la couche résistant à la fusion.

9. Procédé selon l'une quelconque des revendications précédentes, comprenant en outre l'incorporation du granule dans un granulé d'aliment pour animaux ou un mélange non granulé.

10. Procédé selon l'une quelconque des revendications précédentes, comprenant en outre l'incorporation du granule dans une composition de nettoyage ménager.

11. Procédé de production d'une composition d'aliment pour animaux comprenant:

la préparation de granules selon le procédé selon l'une quelconque des revendications 1 à 8;

le mélange des granules ensemble avec un mélange non granulé; et,

la granulation du mélange non granulé à une température de 70°C à 95°C.

Seed ⎱
       ⎰ Core
Active Agent

Immature Delayed-Melt Layer

Mature Delayed-Melt Layer

Melt-Resistant Layer

Melt-Delayed Granule

*FIG. 1*

EP 2 874 506 B1

Effect of Melting Granules Lacking a Melt-Resistant Layer

Before Melting          After Melting

*FIG. 2*

Effect of Melting Granules Containing a Melt-Resistant Layer

Before Melting          After Melting

*FIG. 3*

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4657784 A
- WO 2007044968 A
- US 4689297 A
- US 5324649 A
- EP 656058 B1
- US 454332 A
- US 6248706 B
- EP 804532 B1
- US 6534466 B
- EP 1222256 B1
- US 61595923 B
- US 61595941 B
- US 20060193897 A1

**Non-patent literature cited in the description**

- **KLIBANOV.** Stabilization of Enzymes against Thermal Inactivation. *Advances in Applied Microbiology,* 1983, vol. 29, 1-28
- **SAMBROOK et al.** Molecular Cloning: A Laboratory Manual. 1989
- Oligonucleotide Synthesis. 1984
- Current Protocols in Molecular Biology. 1994
- PCR: The Polymerase Chain Reaction. 1994
- **KRIEGLER.** Gene Transfer and Expression: A Laboratory Manual. 1990
- Pelleting Cost Center. **FAIRFIELD, D.** Feed Manufacturing Technology IV. American Feed Industry Association, 1994, 110-139
- **SINGLETON et al.** Dictionary of Microbiology and Molecular Biology. John Wiley and Sons, 1994
- **HALE ; MARKHAM.** The Harper Collins Dictionary of Biology. Harper Perennial, 1991